Europäisches Patentamt

European Patent Office

Office européen des brevets

(19)

(11) Veröffentlichungsnummer: **0 246 290**
**B1**

(12) **EUROPÄISCHE PATENTSCHRIFT**

(45) Veröffentlichungstag der Patentschrift: **18.04.90**

(51) Int. Cl.⁵: **A 47 J 27/212**

(21) Anmeldenummer: **86906804.9**

(22) Anmeldetag: **31.10.86**

(86) Internationale Anmeldenummer:
**PCT/EP86/00627**

(87) Internationale Veröffentlichungsnummer:
**WO 87/02563 07.05.87 Gazette 87/10**

(54) **FLÖTENKESSEL.**

(30) Priorität: **02.11.85 DE 3538918**

(43) Veröffentlichungstag der Anmeldung:
**25.11.87 Patentblatt 87/48**

(45) Bekanntmachung des Hinweises auf die
Patenterteilung:
**18.04.90 Patentblatt 90/16**

(84) Benannte Vertragsstaaten:
**BE CH GB LI NL**

(56) Entgegenhaltungen:
**AU-B- 526 133**
**DE-U-1 889 924**
**DE-U-8 419 111**
**GB-A- 671 739**

(73) Patentinhaber: **Vandaele, Stephan**
**Zeedijk het Zoute 843 Bus 22**
**B-8300 Knokke-Heist (BE)**

(72) Erfinder: **Vandaele, Stephan**
**Zeedijk het Zoute 843 Bus 22**
**B-8300 Knokke-Heist (BE)**

(74) Vertreter: **Hassler, Werner, Dr.**
**Postfach 17 04 Asenberg 62**
**D-5880 Lüdenscheid (DE)**

## Beschreibung

### Technisches Gebiet der Erfindung

Die Erfindung betrifft einen Flötenkessel mit einem zylindrischen Ausguß une einer an einer Verschlußklappe allseitig beweglich gehaltenen Flötenkappe zum Abdecken der Ausgußmündung.

### Stand der Technik

Ein Flötenkessel dieser Art ist in dem DE—GM 18 89 924 beschrieben. Dort ist die Flötenkappe mittels eines Gelenkzapfens in einer kugelpfannenartigen Aufnahme der Verschlußklappe aufgehängt. Es sind also neben der Flötenkappe zusätzliche Bauteile für die Lagerung notwendig. Die kugelpfannenartige Aufnahme in der Verschlußklappe erfordert einen erheblichen Raum, so daß insgesamt eine große Bautiefe ergibt. Die Flötenkappe leigt unterhalb und außerhalb der Verschlußklappe. Infolgedessen ist diese Lösung auch ästhetisch unbefriedigend.

### Zusammenfassung der Erfindung

Aufgabe der Erfindung ist eine allseitig bewegliche Lagerung der Flötenkappe ohne zusätzliche Lagerelemente und bei geringer Bautiefe. Die Flötenkappe soll im wesentlichen vollständig innerhalb der Verschlußklappe sitzen.

Diese Aufgabe wird nach der Erfindung dadurch gelöst, daß die Verchleßklappe einen kreisrunden Durchbruch aufweist, der einen Ringmantel einer Haube der Flötenkappe beweglich aufnimmt.

Die Erfindung unterscheidet sich insofern vom Stand der Technik, als die Haube der Flötenkappe unmittelbar als Lagerschale ausgebildet ist. Damit findet die Haube vollständig innerhalb der Verschlußklappe Aufnahme. Man erzielt so eine geringe Bautiefe und damit eine sehr befriedigende ästhetische Lösung. Spezielle Lagerteile sind nicht erforderlich. Da die Haube beweglich gehalten ist, stellt sie sich beim Schließen der Verschlußklappe mit ihrem Dichtrand auf die Ausgußmündung ein und wird durch den Stirnrand des Durchbruchs festgedrückt. Dabei kann sich eine punktförmige Anlage des Stirnrandes einstellen. Es ist jedoch immer gewährleistet, daß der Dichtrand der Haube auf der Ausgußmündung aufliegt, so daß ein dichter Abschluß gewährleistet ist.

Eine besonders große Beweglichkeit erzielt man dadurch, daß der Durchbruch eine Kegelringfläche aufweist, wobei die Verjüngung gegen die Ausgußmündung weist, und daß die Haube einen radialen Stirnrand und einen kegelringförmigen, sich von dem radialen Stirnrand aus erweiternden Ringmantel aufweist. Durch den Stirnrand des Durchbruchs wird die Flötenkappe sicher gegen die Ausgußmündung gepreßt und kann sich innerhalb der Kegelringfläche verschwenken und auf die Mündungsebene einstellen.

Eine besonders wirtschaftliche Ausbildung der Flötenkappe aus zwei zusammengepreßten Blechteilen ist in der Weise möglich, daß die Flötenkappe neben der Haube eine Dichtscheibe aufweist, die mit einer Ringkehle über den Stirnrand der Haube greift und mit ihrem Dichtrand auf der Ausgußmündung aufliegt.

### Kurzbeschreibung der Zeichnungen

Eine Ausführungform der Erfindung wird im folgenden unter Bezugnahme auf die anliegende Zeichnung erläutert, in der darstellen:

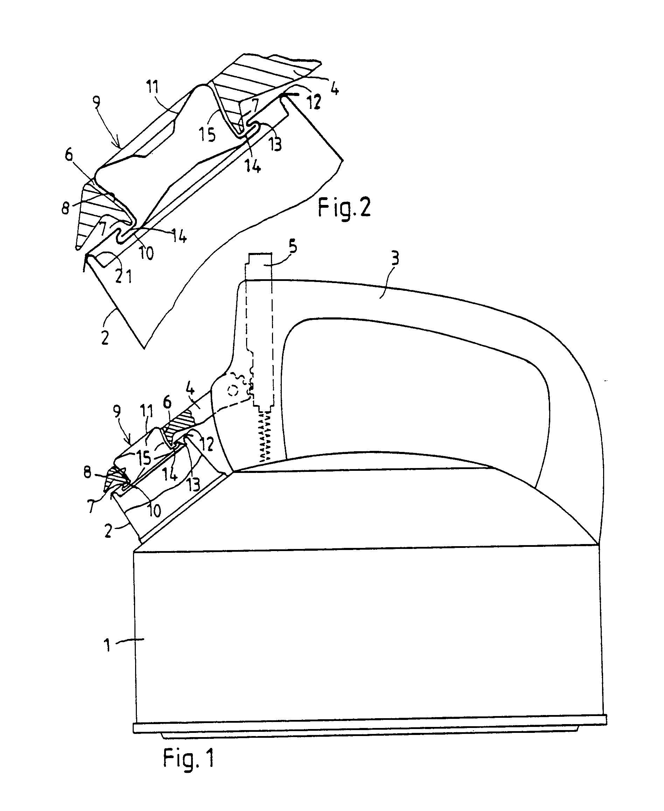

Fig. 1 eine teilweise schematische und teilweise geschnittene Darstellung eines Flötenkessels und

Fig. 2 den Ausguß und die Flötenkappe in vergrößertem Maßstab.

### Ausführungsbeispiel

Ein Flötenkessel 1 weist an der Oberseite einen etwa zylindrischen Ausguß 2 auf, dessen Ausgußmündung 21 einen nach innen gezogenen Bördelrand aufweist. Der Flötenkessel 1 trägt einen Handgriff 3, in dem eine Verscchlußklappe 4 schwenkbar gelagert ist. Die Betätigung der Verschlußklappe 4 erfolgt durch einen Schieber 5. Die Verschlußklappe 4 hat einen kreisrunden Durchbruch 6 mit einem Stirnrand 7, der gegen die Ausgußmündung 21 gerichtet ist, und eine anschließende Kegelringfläche 8, die sich gegen die Ausgußmündung 21 hin verjüngt, wie man aus den Figuren ersieht.

Eine Flötenkappe 9 umfaßt eine Dichtscheibe 10 und eine Haube 11. Die Dichtscheibe 10 sitzt mit einem Dichtrand 12 auf der Ausgußmündung 21 auf und dichtet dieselben ab. Die Dichtscheibe 10 hat außerdem eine Ringkehle 13.

Die Haube 11 liegt mit einem radialen Stirnrand 14 in der Ringkehle 13. Ein Ringmantel 15 der Haube 11 ist Kegelringförmig entsprechend der Kegelringfläche 8 des Durchbruchs 6 augebildet. Die Kegelringfläche des Ringmantels 15 hat vorzugsweise einen kleineren Kegelwinkel als die Kegelringfläche 8, so daß sich der Ringmantel 15 innerhalb der Kegelringfläche 8 leicht bewegen und verschwenken kann. Der Stirnrand 14 der Haube liegt an dem Stirnrand 7 des Durchbruch 6 an und ist so allseitig beweglich. Man erhält eine kugelgelenkartige Verbindung. Die Anordnung der Kegelringflächen läßt eine ausreichende allseitige Beweglichkeit der Flötenkappe 9 innerhalb des Durchbruchs 6 zu.

Die Flötenkappe 9 besteht nur aus zwei tiefgezogenen Blechteilen. Die Montage ist in sehr einfacher Weise möglich. Lie beiden Blechteile, nämlich die Haube 11 und die Dichtscheibe 10 werden zunächst zusammengefügt. Dabei wird die Ringkehle 13 über den Stirnrand 14 gelegt. Der Ringmantel 15 der Haube 11 ist in diesem Ausganszustand zylindrisch, so daß die gesamte Anordnung durch den Stirnrand 7 hindurch in den Durchbruch 6 eingeführt werden kann. Nach der Anordnung der Flötenkappe 9 innerhalb des Durchbruchs 6 wird ein axialer Druck auf die haube 11 ausgeübt, so daß der zylindrische Ringmantel 15 in eine Kegelringfläche verformt. Die Flötenkappe 9 ist damit allseitig beweglich, jedoch unlösbar innerhalb des Durchbruchs 6 gehalten.

Diese Ausbildung ermöglicht eine sehr niedrige Gestaltung der Flötenkappe und läßt einer sehr befriedigende ästhetische Lösung zu. Für die Schwenklagerung der Flötenkappe sind keine zusätzlichen Lagerelemente notwendig. Vielmehr sind die Teile der Flötenkappe so ausgebildet, daß sie die erforderliche Beweglichkeit unmittelbar zulassen. Beim Zudrücken der Verschlußklappe 4 stellt sich die Flötenkappe 9 mit ihrem Dichtrand 12 selbstzentrierend auf die Ausgußmündung 21 ein. Der Stirnrand 7 des Durchbruchs 8 drückt auf den Stirnrand 14, wobei sich der Auflagebereich entsprechend der selbsttätigen Zentrierung einstellt.

## Patentänspruche

1. Flötenkessel mit einem zylindrischen Ausguß und einer an einer Verschlußklappe (4) allseitig beweglich gehaltenen Flötenkappe (9) zum Abdecken der Ausgußmündung (21), dadurch gekennzeichnet, daß die Verschlußklappe (4) eine kreisrunden Durchbruch (6) aufweist, der einen Ringmantel (15) einer Haube (11) der Flötenkappe (9) beweglich aufnimmt.

2. Flötenkessel nach Anspruch 1, dadurch gekennzeichnet, daß der Durchbruch (6) eine Kegelringfläche (8) aufweist, wobei die Verjüngung gegen die Ausgußmündung (21) weist, und daß die Haube (11) einen radialen Stirnrand (14) und einen kegelringförmigen, sich von dem radialen Stirnrand (14) aus erweiterndem Ringmantel (15) aufweist.

3. Flötenkessel nach Anspruch 1 oder 2, dadurch gekennzeichnet, daß die Flötenkappe (9) neben der Haube (11) eine Dichtscheibe (10) aufweist, die mit einer Ringkehle (13) über den Stirnrand (14) der Haube (11) greift und mit ihrem Dichtrand (12) auf der Ausgußmündung (21) aufliegt.

## Revendications

1. Bouilloire à sifflet comprenant un bec verseur cylindrique et un capuchon à sifflet (9), qui est destiné à recouvir l'embouchure de bec (21) et est retenu de manière mobile dans tous les sens sur un clapet d'obturation (4), caractérisé en ce que le clapet d'oburation (4), présente une ouverture circulaire (6) qui reçoit, de manière amovible, une enveloppe annulaire (15) d'une calotte (11) du capuchon à sifflet (9).

2. Bouilloire à sifflet suivant la revendication 1, caractérisé en ce que l'ouverture (6) présente une surface annulaire conique (8), le rétrécissement étant orienté vers l'embouchure du bec (21) et en ce que la calotte (11) présente un bord frontal radial (14) et une enveloppe annulaire (15) en forme d'aneau conique qui s'élargit à partir du bord frontal radial (14).

3. Bouilloire à sifflet suivant la revendication 1 ou 2, caractérisé en ce que le capuchon à sifflet (9) présente, outre la calotte (11), un disque d'étanchéité (10) qui entre en prise par une gorge annulaire (13) par-dessus le bord frontal (14) de la calotte (11) et qui est en appui sur l'embouchure du bec (21) par son bord d'étanchéité (12).

## Claims

1. Whistling kettle having a cylindrical spout and a whistle cap (9) mounted movably in all directions on a closure flap (4), for covering the mouth (21) of the spout, characterized in that the closure flap (4) has a circular through hole (6) which movably receives an annular casing (15) of a cover (11) of the whistle cap (9).

2. Whistling kettle according to Claim 1, characterized in that the through hole (6) has a frustoconical surface (8), tapering towards the mouth (21) of the spout, and in that the cover (11) has a radial end face edge (14) and a frustoconical casing (15) which diverges from the radial end face edge (14).

3. Whistling kettle according to Claim 1 or 2, characterized in that the whistle cap (9) has next to the cover (11) a sealing disc (10) which engages by means of an annular groove (13) over the end face edge (14) of the cover (11) and bears by means of its sealing edge (12) on the mouth (21) of the spout.

Fig.2

Fig. 1

1